# EUROPEAN PATENT SPECIFICATION

(11) **EP 4 170 796 B1**
(45) Date of publication and mention of the grant of the patent: **05.08.2026**
(21) Application number: 22742930.5
(22) Date of filing: 17.01.2022
(51) Int. Cl.: H01M 50/24, H01M 50/502, H01M 50/211, H01M 50/507, H01M 50/291, H01M 50/293, H01M 50/209, H01M 50/271, H01M 50/50

(54) **BATTERY MODULE AND BATTERY PACK INCLUDING SAME**
BATTERIEMODUL UND BATTERIEPACK DAMIT
MODULE DE BATTERIE ET BLOC-BATTERIE LE COMPRENANT

(30) Priority: 19.01.2021 KR 20210007656; 13.01.2022 KR 20220005292
(43) Date of publication of application: 26.04.2023
(73) Proprietor: LG Energy Solution, Ltd., Seoul 07335 (KR)
(72) Inventor: JANG, Sunghwan, Daejeon 34122 (KR); PARK, Myungki, Daejeon 34122 (KR); KIM, Gwan Woo, Daejeon 34122 (KR)
(74) Representative: Goddar, Heinz J.
(86) International application number: PCT/KR2022/095013
(87) International publication number: WO 2022/158954

(56) References cited:
- EP-A1- 3 731 304
- WO-A1-2020/251159
- CN-U- 212 230 479
- KR-A- 20170 024 725
- KR-A- 20180 099 438
- KR-A- 20200 108 714
- KR-A- 20200 142 242
- KR-A- 20200 142 242

## Description

### [TECHNICAL FIELD]

The present invention relates to a battery module and a battery pack including the same, and more particularly, to a battery module with improved insulation performance and a battery pack including the same.

### [BACKGROUND]

Along with the increase of technology development and demands for mobile devices, the demand for batteries as energy sources is increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Small-sized mobile devices use one or several battery cells for each device, whereas middle or large-sized devices such as vehicles require high power and large capacity. Therefore, a middle or large-sized battery module having a plurality of battery cells electrically connected to one another is used.

The middle or large-sized battery module is preferably manufactured so as to have as small a size and weight as possible. Consequently, a prismatic battery, a pouch-shaped battery or the like, which can be stacked with high integration and has a small weight relative to capacity, is mainly used as a battery cell of the middle or large-sized battery module. Meanwhile, in order to protect the battery cell stack from external impact, heat or vibration, the battery module may include a module frame which is opened in its front and rear sides and houses the battery cell stack in an internal space.

An exemplary battery module and an exemplary battery pack are known from KR 2020 0142242 A, which discloses the preamble of independent claim 1.

Another exemplary battery module is known from WO 2020/251159 A1. Yet another exemplary battery module is known from EP 3 731 304 A1.

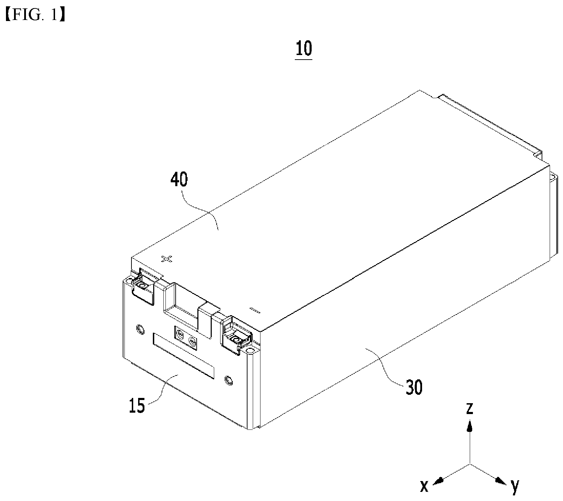

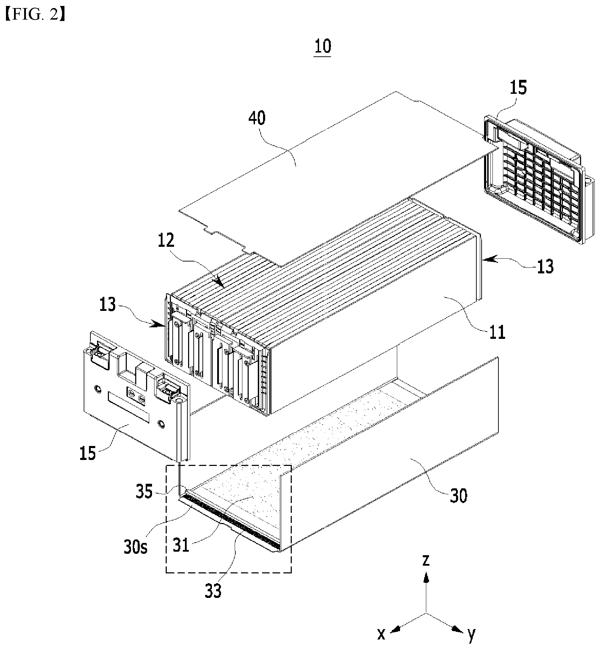

Fig. 1 is a perspective view of a conventional battery module. Fig. 2 is an exploded perspective view of components included in the battery module of Fig. 1.

Referring to Figs. 1 and 2, the conventional battery module 10 includes a battery cell stack 20 in which a plurality of battery cells 11 are stacked in one direction, module frames 30 and 40 that house the battery cell stack 12, end plates 15 that cover the front and rear surfaces of the battery cell stack, and a busbar frame 13 formed between the end plate 15 and the front and rear surfaces of the battery cell stack 12. The module frames 30 and 40 include a lower frame 30 that covers the lower part and both side surfaces of the battery cell stack 12, and an upper plate 40 that covers the upper surface of the battery cell stack 12. The battery module 10 can cool the heat generated by the battery cell stack 12 by applying a heat conductive resin layer 31 to a lower surface covering the lower part of the battery cell stack 12 in the lower frame 30.

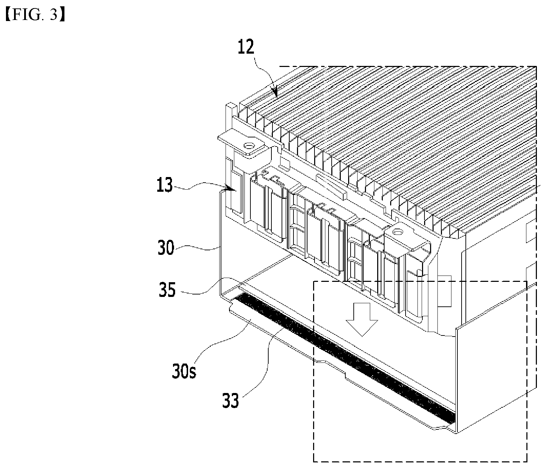

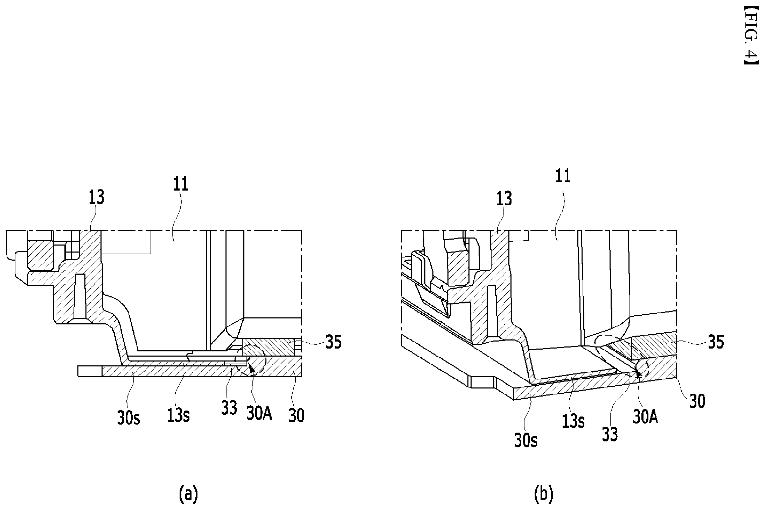

Fig. 3 is a perspective view showing a state before the battery cell stack of Fig. 2 mounted with the busbar frame is coupled to the module frame. Fig. 4 is a cross-sectional view showing a state in which the battery cell stack mounted with the busbar frame of Fig. 2 is coupled to the module frame.

Referring to Figs. 2 and 3, the conventional battery module 10 is formed with a stepped part 30s at both end parts of the lower frame 30. Here, an insulating member 33 is attached to at least a part of the stepped part 30s, and a blocking pad 35 is attached adjacent to the stepped part 30s at the center of the lower frame 30.

Recently, as battery modules and battery packs are applied to high-performance vehicles, the demand for high-voltage modules and packs is increasing. However, referring to Fig. 4, the boundary part 30A located at the boundary between the central part of the lower frame 30 and the stepped part 30s has a step difference formed by the stepped part 30s. Here, the insulating member 33 is not located in the portion corresponding to the boundary part 30A, and thus, insulation may not be sufficiently performed between the battery cell 11 and the boundary part 30A. Thereby, the insulating member 33 is formed at an appropriate position, and thus, there is a need to develop a battery module having improved insulation performance between the lower frame 30 and the battery cell 11.

### [DETAILED DESCRIPTION OF THE INVENTION]

### [Technical Problem]

It is an object of the present disclosure to provide a battery module with improved insulation performance and a battery pack including the same.

### [Technical Solution]

According to one embodiment of the present invention, there is provided a battery module comprising: a battery cell stack in which a plurality of battery cells are stacked; a busbar frame connected to the front and rear surfaces of the battery cell stack, respectively; and a module frame that houses the battery cell stack on which the busbar frame is mounted, wherein the module frame comprises a lower frame that covers the lower part and both side surfaces of the battery cell stack, and an upper plate that covers an upper surface of the battery cell stack, wherein the busbar frame comprises a support part that wraps the end part of the battery cell, wherein the battery module further comprises an insulating member that is extended from the lower surface of the support part toward the outside of the support part, wherein the end part of the battery cell comprises a protrusion part formed in the width direction of the battery cell, and the protrusion part is located on the support part, wherein a part of the insulating member is located between the support part and a stepped part and the remaining part of the insulating member is located between the battery cell stack and the lower frame, wherein the isolating member is attached to a part of the lower surface of the support part, wherein stepped parts are formed on both sides of the lower frame, and the stepped part is one of the stepped parts and is formed at one end of the bottom part of the module frame, wherein the bottom part of the module frame includes a first part and a second part, wherein the first part is located at the edge with respect to the longitudinal direction of the battery cell, and the second part is located inside the first part.

The support part may be located between the protrusion part and the stepped part formed at one end part of the module frame.

The insulating member may cover a boundary line between the central part of the lower frame and the stepped part.

The insulating member may be extended along a longitudinal direction of the stepped part.

A blocking pad is located on the lower frame, and the blocking pad may be located adjacent to the stepped part.

The remaining part of the insulating member may be located between the battery cell stack and the blocking pad.

The blocking pad may be extended along the width direction of the lower frame.

The blocking pad may include an insulating material.

The insulating member may include at least one of PET (polyethylene terephthalate), PC (polycarbonate), PI (polyimide), and PA (polyamide) materials.

According to yet another embodiment of the present invention, there is provided a battery pack comprising the above-mentioned battery module.

### [Advantageous Effects]

According to embodiments, the present invention includes an insulating member that is extended from the support part of the busbar frame toward the lower surface of the module frame, thereby capable of improving insulation performance of the battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view of a conventional battery module;
Fig. 2 is an exploded perspective view of components included in the battery module of Fig. 1;
Fig. 3 is a perspective view showing a state before the battery cell stack of Fig. 2 mounted with the busbar frame is coupled to the module frame;
Fig. 4 is a cross-sectional view showing a state in which the battery cell stack mounted with the busbar frame of Fig. 2 is coupled to the module frame;
Fig. 5 is a perspective view of a battery module according to an embodiment of the present invention;
Fig. 6 is an exploded perspective view of components included in the battery module of Fig. 5;
Fig. 7 is a perspective view of a battery cell included in the battery module of Fig. 5;
Fig. 8 is a perspective view showing a state before the battery cell stack of Fig. 5 mounted on the busbar frame is coupled to the module frame;
Fig. 9 is a perspective view showing a cross-section taken along the A-A' axis of Fig. 8; and
Fig. 10 is a cross-sectional view showing a state in which the battery cell stack mounted with the busbar frame of Fig. 9 is coupled to the module frame, according to the invention.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Hereinafter, a battery module according to an embodiment of the present disclosure will be described. However, the description will be given based on front and rear surfaces of the battery module, but is not necessarily limited thereto. Even in the case of the rear surface, it will be described in the same or similar manner.

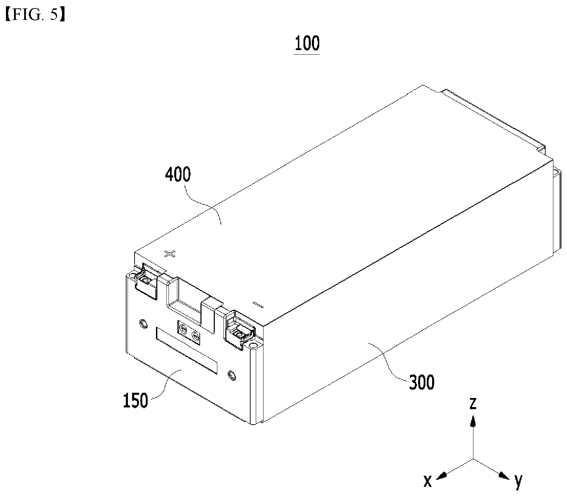

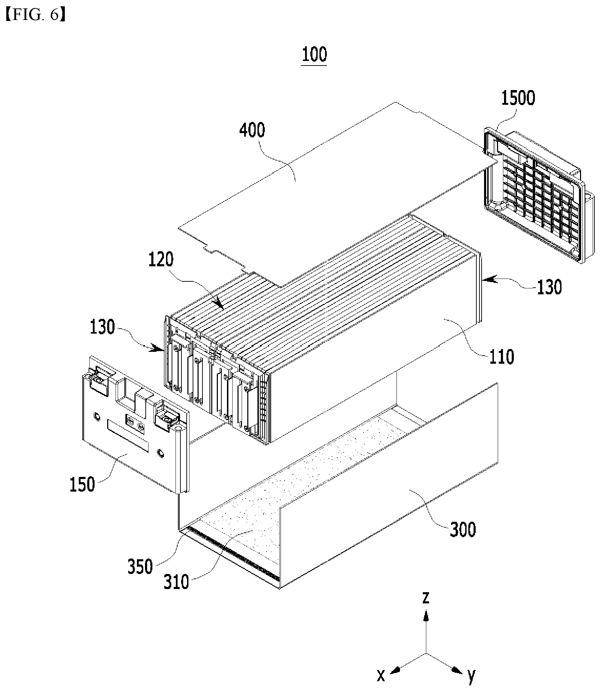

Fig. 5 is a perspective view of a battery module according to an embodiment of the present invention. Fig. 6 is an exploded perspective view of components included in the battery module of Fig. 5.

Referring to Fig. 5, a battery module 100 includes a battery cell stack 120 in which a plurality of battery cells 110 are stacked in one direction, module frames 300 and 400 that house the battery cell stack 120, end plates 150 that cover the front and rear surfaces of the battery cell stack, and a busbar frame 130 that is formed between the end plate 150 and the front and rear surfaces of the battery cell stack 120. Here, a busbar electrically connected to the battery cell stack 120 may be located on the busbar frame 130.

Further, the module frames 300 and 400 include a lower frame 300 of which an upper surface, a front surface and a rear surface are opened, and an upper plate 400 that covers the upper part of the battery cell stack 120. However, the module frames 300 and 400 are not limited thereto, and can be replaced with a frame in which one side part is coupled to the upper part of the L-shaped frame, or the central part of the lower part of the mono frame surrounding the battery cell stack 120 excluding the front and rear surfaces is opened. In the following, the lower frame 300 will be mainly described, but when replaced with the other frames described above, the lower surfaces of the module frames 300 and 400 may be described similarly.

Further, a heat conductive resin layer 310 may be located between the battery cell stack 120 and the lower frame 300. Before the battery cell stack 120 is mounted on the lower frame 300, the heat conductive resin layer 310 may be formed by applying and then curing the heat conductive resin on the lower frame 300. Thereby, the heat conductive resin layer 310 can transfer heat generated in the battery cell 110 to the bottom of the battery module 100 to cool the battery cell 110.

Further, the battery cell stack 120 housed in the lower frame 300 is configured such that a plurality of battery cells 110 are stacked in one direction (y-axis direction), and the battery cells 110 are preferably pouch type battery cells. The battery cell 110 may be manufactured by housing the electrode assembly in a pouch case made of a laminated sheet including a resin layer and a metal layer, and then heat-fusing a sealing part of the pouch case. The battery cells 110 can configured in plural numbers, and the plurality of battery cells 110 form a battery cell stack 120 that is stacked so as to be electrically connected to each other.

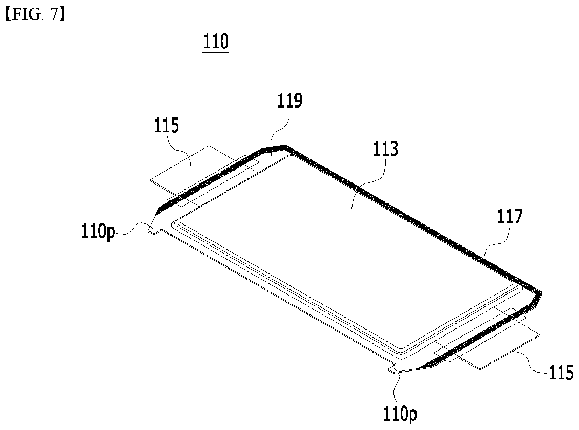

Fig. 7 is a perspective view of a battery cell included in the battery module of Fig. 5.

Referring to Figs. 6 and 7, the battery cell 110 is preferably a pouch type battery cell. The battery cell 110 according to an embodiment has a structure in which two electrode leads 115 face each other and protrude from both end parts of the battery main body 113, respectively. Further, the battery cell 110 may be manufactured in the form of a pouch in which an electrode assembly (not shown) is housed in a battery case 117 including the battery main body 113.

Here, the battery cell 110 includes a connection part 119 that is a region extending long along the edge, and a protrusion part 110p of the battery cell 110 called a bat-ear may be formed at an end part of the connection part 119. The protrusion part 110p may be formed on at least one of both end parts of the connection part 119, and may protrude in a direction perpendicular to the direction in which the connecting part 119 extends. The protrusion part 110p may be caught on the stepped part 300s formed on one side of the lower surface of the lower frame 300, which will be described later, to prevent the battery cell 110 from flowing due to an external impact. In particular, the battery cell 110 is a pouch type battery cell, and the thickness of the battery main body 113 may be formed so as to be larger than the thickness of the protrusion part 110p.

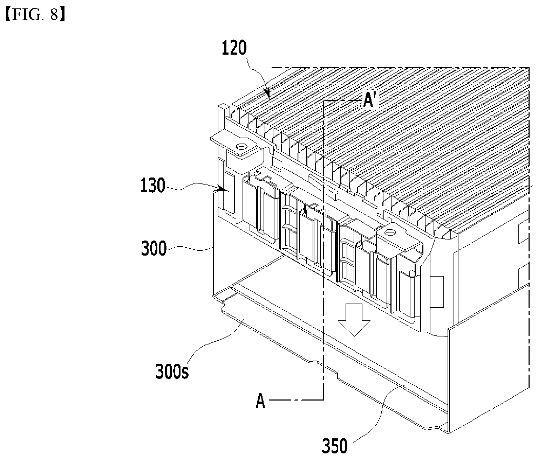

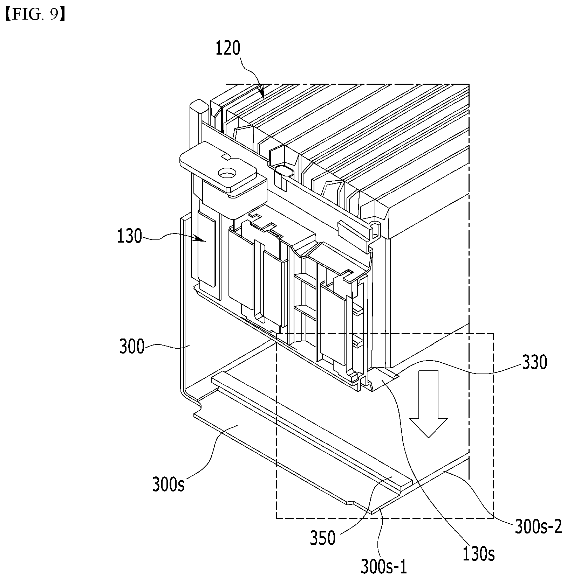

Fig. 8 is a perspective view showing a state before the battery cell stack of Fig. 5 mounted on the busbar frame is coupled to the module frame. Fig. 9 is a perspective view showing a cross-section taken along the A-A' axis of Fig. 8.

Referring Figs. 8 and 9, the battery module 100 according to the present embodiment includes stepped parts 300s that are formed on both sides of the lower surface of the module frames 300 and 400. In one example, when the module frames 300 and 400 include the lower frame 300 and the upper plate 400, stepped parts 300s are formed on both sides of the lower frame 300. Here, the stepped part 300s may be extended along the stacking direction (y-axis direction) of the battery cells 110 of the battery cell stack 120. The stepped part 300s is formed at one end of the bottom part of the module frame 300, and the bottom part of the module frame 300 includes a first part 300s-1 and a second part 300s-2. The first part 300s-1 is located at the edge with respect to the longitudinal direction of the battery cell 110, and the second part 300s-2 is located inside the first part 300s-1. At this time, the thickness of the first part 300s-1 is preferably thinner than the thickness of the second part 300s-2. Here, the longitudinal direction of the battery cell 110 may be the x-axis direction of Fig. 6.

Thereby, in the lower frame 300, as the protrusion part 110p of the battery cell 110 described above is caught by the stepped part 300s, thereby capable of preventing the battery cell 110 from flowing to an external impact.

Further, in the present embodiment, the busbar frame 130 includes a support part 130s that wraps the end part of the battery cell stack 120. In other words, the support part 130s wraps the end part of the battery cell 110. More specifically, the busbar frame 130 has a support part 130s that can wrap the lower ends of the front and rear surfaces of the battery cell stack 120. In particular, as described above, the battery cells 110 of the battery cell stack 120 may include a protrusion part 110p facing the lower frame 300, and the support part 130s may wrap the respective protrusion parts 110p formed in the battery cells 110 of the battery cell stack 120.

Further, the protrusion part 110p is located on the support part 130s, and the support part 130s may be located between the protrusion part 110p of the battery cell and the stepped part 300s. In other words, the lower surface of the support part 130s may be in contact with the stepped part 300s. More specifically, as the busbar frames 130 are mounted on the front and rear surfaces of the battery cell stack 120, respectively, the lower surface of the protrusion 110p of the battery cell 110 may be wrapped by the support part 130s, so that the lower surface of the support part 130s can come into contact with the stepped part 300s.

Thereby, the support part 130s can protect the protrusion part 110p from external impact. Further, the support part 130s can prevent direct contact between the battery cell 110 and the lower frame 300, thereby improving insulation performance.

Next, the insulating member 330 and the blocking pad 350 will be described in more detail based on one end part of the lower frame 300.

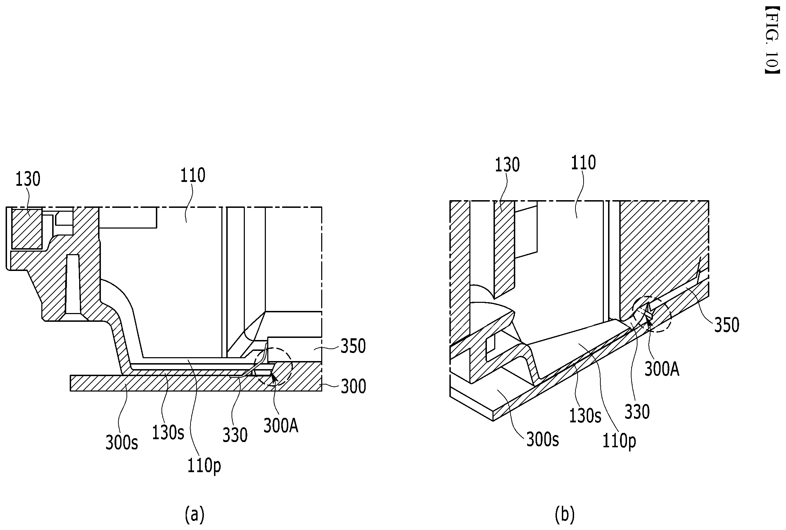

Fig. 10 is a cross-sectional view showing a state in which the battery cell stack mounted with the busbar frame of Fig. 9 is coupled to the module frame. Fig. 10(a) is a cross-sectional view showing a state in which the battery cell stack mounted with the busbar frame of Fig. 9 is coupled to the module frame, as viewed from the front, and Fig. 10 (b) shows the cross-sectional view of Fig. 10(a) as viewed in a state of rotation.

Referring to Figs. 9 and 10, in the present embodiment according to the invention, the battery module 100 further includes an insulating member 330 that is extended from the lower surface of the support part 130s toward the center of the lower surface of the battery cell stack. The central part of the lower surface of the battery cell stack may refer to a central part of the lower surface of the battery cell stack corresponding to the region in which the heat conductive resin layer 310 shown in Fig. 6 is formed. The insulating member 330 may be extended toward the outside of the support part 130s.

Here, a part of the insulating member 330 is located between the support part 130s and the stepped part 300s, and the remaining part of the insulating member 330 is located between the battery cell stack 120 and the lower frame 300. More specifically, the insulating member 330 may cover a boundary line between the central part of the lower frame 300 and the stepped part 300s. Further, the insulating member 300 may cover the stepped part formed in the boundary part 300A located at the boundary between the central part of the lower frame 300 and the stepped part 300s.

More specifically, the insulating member 330 may be extended along the longitudinal direction of the stepped part 300s. Further, the insulating member 330 may be extended along the width direction of the stepped part 300s. However, considering the protruding length of the protrusion part 110p of the battery cell 110 and the step difference of a boundary part 300A, the width of the insulating member 330 may be adjusted so that there is no portion where the protrusion part 110p and the boundary part 300A come into contact with each other.

Thereby, as compared with the conventional battery module 10 in which the insulating member 33 is attached only to the stepped part 30s, in the present embodiment, the area of the insulating member 330 is further increased, and the insulating performance can be further improved. Further, the protrusion part 110p of the battery cell 110 described above may not be exposed to the stepped part formed at the boundary part 300A, so that insulation performance between the battery cell 110 and the lower frame 300 can be sufficiently secured.

In addition to this, unlike the process of attaching the insulating member 33 to the step 30s of the conventional battery module 10, in the present embodiment, the insulating member 330 is attached to the support part 130s, so that the process can be further simplified and the productivity can be improved.

Further, the insulating member 330 may be made of a material having moldability and ductility. More specifically, the insulating member 330 is made of a material that can be molded through 3D forming and has sufficient ductility, and the insulating member 330 may be formed in consideration of the shape of the stepped part 300s of the lower frame 300. In one example, the insulating member 330 may be manufactured in the form of a film including at least one of PET (polyethylene terephthalate), PC (polycarbonate), PI (polyimide), and PA (polyamide) materials, but is not limited thereto.

The insulating member 330 may be integrated with a part of the lower surface of the support part 130s. The insulating member 330 is attached to a part of the lower surface of the support part 130s.

In one example, an adhesive layer may be located between the insulating member 330 and the support part 130s. Further, the adhesive layer may be extended along the width and length directions of the insulating member 330. Each of the adhesive layers may be formed of a tape or may be formed by being coated with an adhesive binder. More preferably, the adhesive layer is coated with an adhesive binder or is made of a double-sided tape, so as to be easily fixed between the insulating member 330 and the support part 130s. However, the present disclosure is not limited thereto, and any material having adhesive performance capable of fixing the insulating member 330 and the support part 130s to each other can be applied without limitation. Thereby, the insulating member 330 can be stably fixed to the support part 130s.

Referring to Figs. 9 and 10, in the battery module 100 according to the present embodiment, the blocking pad 350 may be located on the lower frame 300. More specifically, in the lower frame 300, it may be located adjacent to the stepped part 300s. Further, the blocking pad 350 can be extended along the width direction of the lower frame 300.

Here, the blocking pad 350 may include an insulating material. For example, it may include at least one of PET (polyethylene terephthalate), PC (polycarbonate), PI (polyimide), and PA (polyamide) materials.

Thereby, the blocking pad 350 can prevent the lower frame 300 and the battery cell stack 120 from coming into contact with each other, and also improve the insulation performance between the battery cell stack 120 and the lower frame 300.

Further, an adhesive layer may be located between the lower frame 300 and the blocking pad 350. The adhesive layer may be extended along the width and length directions of the blocking pad 350. The adhesive layer may be formed of a tape or may be formed by being coated with an adhesive binder. More preferably, the adhesive layer can be coated with an adhesive binder or be made of a double-sided tape, so as to be easily fixed between the lower frame 300 and the blocking pad 350. However, the present disclosure is not limited thereto, and any material having adhesive performance capable of fixing between the lower frame 300 and the blocking pad 350 to each other can be applied without limitation. Thereby, the blocking pad 350 can be stably fixed on the lower frame 300. Further, a part of the insulating member 330 is located between the support part 130s and the stepped part 300s, and the remaining part of the insulating member 330 may be located between the battery cell stack 120 and the lower frame 300. More specifically, the remaining part of the insulating member 330 may be located between the battery cell stack 120 and the blocking pad 350.

Thereby, in the present embodiment, the insulating member 330 is extended from the support part 130s to a part of the blocking pad 350, so that insulation performance between the battery cell 110 and the lower frame 300 can be sufficiently secured. In addition, the insulating member 330 can be located not only between the protrusion part 110p of the battery cell 110 and the stepped part formed in the boundary part 300A, but also between the blocking pad 350 and the protrusion 110p, so that insulation performance between the battery cell 110 and the lower frame 300 can be further improved.

Further, referring to Figs. 6, 9, and 10, the heat conductive resin layer 310 can be located between the blocking pads 350 formed on both sides of the lower frame 300. Here, the blocking pad 350 can be used without limitation as long as it is a material capable of blocking the heat conductive resin layer 310 from the outside. In one example, the blocking pad 350 may include a resin material, but is not limited thereto.

Thereby, the blocking pad 350 can adjust the region in which the heat conductive resin layer 310 can be formed, and the blocking pad 350 can prevent the heat conductive resin from being injected to an unnecessary region.

A battery pack according to another embodiment of the present invention includes the battery module described above. Meanwhile, one or more battery modules according to the present embodiment can be packaged in a pack case to form a battery pack.

The above-mentioned battery module and the battery pack including the same can be applied to a vehicle means such as an electric bicycle, an electric vehicle, or a hybrid vehicle, but is not limited thereto, and is applicable to various devices that can use a battery module and the battery pack including the same.

### [Description of Reference Numerals]

100: battery module
110: battery cell
120: battery cell stack
130: busbar frame
130s: support part
150: end plate
300: lower frame
300A: boundary part
300s: stepped part
310: heat conductive resin layer
330: insulating member
350: blocking pad
400: upper plate

## Claims

1. A battery module (100) comprising:
a battery cell stack (120) in which a plurality of battery cells (110) are stacked;
a busbar frame (130) connected to the front and rear surfaces of the battery cell stack (120), respectively;
and
a module frame (300, 400) that houses the battery cell stack (120) on which the busbar frame (130) is mounted, wherein the module frame (300, 400) comprises a lower frame (300) that covers the lower part and both side surfaces of the battery cell stack (120), and an upper plate (400) that covers an upper surface of the battery cell stack (120),
wherein the busbar frame (130) comprises a support part (130s) that wraps the end part of the battery cell (110), wherein the battery module (100) further comprises an insulating member (330), that is extended from the lower surface of the support part (130s) toward the outside of the support part (130s),
wherein the end part of the battery cell (110) comprises a protrusion part (110p) formed in the width direction of the battery cell (110), and the protrusion part (110p) is located on the support part (130s),
**characterized in that** a part of the insulating member (330) is located between the support part (130s) and a stepped part (300s) and the remaining part of the insulating member (330) is located between the battery cell stack (120) and the lower frame (300, 400),
wherein the isolating member (330) is attached to a part of the lower surface of the support part (130s),
wherein stepped parts (300s) are formed on both sides of the lower frame (300), and
the stepped part (300s) is one of the stepped parts (300s) and is formed at one end of the bottom part of the module frame (300), wherein the bottom part of the module frame (300) includes a first part (300s-1) and a second part (300s-2), wherein the first part (300s-1) is located at the edge with respect to the longitudinal direction of the battery cell (110), and the second part (300s-2) is located inside the first part (300s-1).

2. The battery module (100) of claim 1, wherein:
the insulating member (130) covers a boundary line between the central part of the lower frame (300) and the stepped part (300s).

3. The battery module (100) of claim 2, wherein:
the insulating member (330) is extended along a longitudinal direction of the stepped part (300s).

4. The battery module (100) of any of the preceding claims, wherein:
a blocking pad (350) is located on the lower frame (300), and
the blocking pad (350) is located adjacent to the stepped part (300s).

5. The battery module (100) of claim 4, wherein:
the remaining part of the insulating member (330) is located between the battery cell stack (120) and the blocking pad (350).

6. The battery module (100) of claim 4 or 5, wherein:
the blocking pad (350) is extended along the width direction of the lower frame (300).

7. The battery module (100) of any of claims 4 to 6, wherein:
the blocking pad (350) comprises an insulating material.

8. The battery module (100) of any of the preceding claims, wherein:
the insulating member (330) comprises at least one of PET (polyethylene terephthalate), PC (polycarbonate), PI (polyimide), and PA (polyamide) materials.

9. A battery pack comprising the battery module (100) of any of the preceding claims.

## Patentansprüche

1. Batteriemodul (100), umfassend:
einen Batteriezellenstapel (120), in dem eine Vielzahl von Batteriezellen (110) gestapelt sind;
einen Sammelschienenrahmen (130), der mit der Vorder- bzw. der Rückfläche des Batteriezellenstapels (120) verbunden ist;
und
einen Modulrahmen (300, 400), der den Batteriezellenstapel (120) aufnimmt, auf dem der Sammelschienenrahmen (130) montiert ist, wobei der Modulrahmen (300, 400) einen unteren Rahmen (300), der den unteren Teil und beide Seitenflächen des Batteriezellenstapels (120) abdeckt, und eine obere Platte (400), die eine obere Fläche des Batteriezellenstapels (120) abdeckt, umfasst,
wobei der Sammelschienenrahmen (130) einen Stützteil (130s) umfasst, der den Endteil der Batteriezelle (110) umhüllt, wobei das Batteriemodul (100) ferner ein Isolierelement (330) umfasst, das sich von der unteren Fläche des Stützteils (130s) zur Außenseite des Stützteils (130s) erstreckt,
wobei der Endteil der Batteriezelle (110) einen Vorsprungsteil (110p) umfasst, der in der Breitenrichtung der Batteriezelle (110) ausgebildet ist, und der Vorsprungsteil (110p) auf dem Stützteil (130s) angeordnet ist,
**dadurch gekennzeichnet, dass** ein Teil des Isolierelements (330) zwischen dem Stützteil (130s) und einem abgestuften Teil (300s) angeordnet ist und der verbleibende Teil des Isolierelements (330) zwischen dem Batteriezellenstapel (120) und dem unteren Rahmen (300, 400) angeordnet ist,
wobei das Isolierelement (330) an einem Teil der unteren Fläche des Stützteils (130s) angebracht ist,
wobei abgestufte Teile (300s) auf beiden Seiten des unteren Rahmens (300) ausgebildet sind und der abgestufte Teil (300s) einer der abgestuften Teile (300s) ist und an einem Ende des unteren Teils des Modulrahmens (300) ausgebildet ist, wobei der untere Teil des Modulrahmens (300) einen ersten Teil (300s-1) und einen zweiten Teil (300s-2) umfasst, wobei der erste Teil (300s-1) an der Kante in Bezug auf die Längsrichtung der Batteriezelle (110) angeordnet ist und der zweite Teil (300s-2) innerhalb des ersten Teils (300s-1) angeordnet ist.

2. Batteriemodul (100) nach Anspruch 1, wobei:
das Isolierelement (130) eine Grenzlinie zwischen dem mittleren Teil des unteren Rahmens (300) und dem abgestuften Teil (300s) abdeckt.

3. Batteriemodul (100) nach Anspruch 2, wobei:
das Isolierelement (330) sich entlang einer Längsrichtung des abgestuften Teils (300s) erstreckt.

4. Batteriemodul (100) nach einem der vorhergehenden Ansprüche, wobei:
ein Blockierpad (350) auf dem unteren Rahmen (300) angeordnet ist, und
das Blockierpad (350) angrenzend an den abgestuften Teil (300s) angeordnet ist.

5. Batteriemodul (100) nach Anspruch 4, wobei:
der verbleibende Teil des Isolierelements (330) zwischen dem Batteriezellenstapel (120) und dem Blockierpad (350) angeordnet ist.

6. Batteriemodul (100) nach Anspruch 4 oder 5, wobei:
das Blockierpad (350) sich entlang der Breitenrichtung des unteren Rahmens (300) erstreckt.

7. Batteriemodul (100) nach einem der Ansprüche 4 bis 6, wobei:
das Blockierpad (350) ein Isoliermaterial umfasst.

8. Batteriemodul (100) nach einem der vorhergehenden Ansprüche, wobei:
das Isolierelement (330) mindestens eines von PET- (Polyethylenterephthalat-), PC-(Polycarbonat-), PI- (Polyimid-) und PA- (Polyamid-) Materialien umfasst.

9. Batteriepack, umfassend das Batteriemodul (100) nach einem der vorhergehenden Ansprüche.

## Revendications

1. Module de batterie (100), comportant :
un empilement d'éléments de batterie (120) dans lequel des éléments d'une pluralité d'éléments de batterie (110) sont empilés ;
un cadre de barre omnibus (130) relié aux surfaces avant et arrière de l'empilement d'éléments de batterie (120), respectivement ;
et
un cadre de module (300, 400) qui reçoit l'empilement d'éléments de batterie (120) sur lequel le cadre de barre omnibus (130) est monté, dans lequel le cadre de module (300, 400) comporte un cadre inférieur (300) qui recouvre la partie inférieure et les deux surfaces latérales de l'empilement d'éléments de batterie (120), et une plaque supérieure (400) qui recouvre une surface supérieure de l'empilement d'éléments de batterie (120),
dans lequel le cadre de barre omnibus (130) comporte une partie de support (130s) qui enveloppe la partie d'extrémité de l'élément de batterie (110), dans lequel le module de batterie (100) comporte par ailleurs un élément isolant (330), qui s'étend de la surface inférieure de la partie de support (130s) vers l'extérieur de la partie de support (130s),
dans lequel la partie d'extrémité de l'élément de batterie (110) comporte une partie saillante (110p) formée dans la direction allant dans le sens de la largeur de l'élément de batterie (110), et la partie saillante (110p) est située sur la partie de support (130s),
**caractérisé en ce qu'**une partie de l'élément isolant (330) est située entre la partie de support (130s) et une partie étagée (300s) et la partie restante de l'élément isolant (330) est située entre l'empilement d'éléments de batterie (120) et le cadre inférieur (300, 400),
dans lequel l'élément isolant (330) est fixé à une partie de la surface inférieure de la partie de support (130s),
dans lequel des parties étagées (300s) sont formées sur les deux côtés du cadre inférieur (300), et la partie étagée (300s) est l'une des parties étagées (300s) et est formée à une extrémité de la partie inférieure du cadre de module (300), dans lequel la partie inférieure du cadre de module (300) comprend une première partie (300s-1) et une deuxième partie (300s-2), dans lequel la première partie (300s-1) est située au bord par rapport à la direction longitudinale de l'élément de batterie (110), et la deuxième partie (300s-2) est située à l'intérieur de la première partie (300s-1).

2. Module de batterie (100) selon la revendication 1, dans lequel :
l'élément isolant (130) recouvre une ligne limite entre la partie centrale du cadre inférieur (300) et la partie étagée (300s).

3. Module de batterie (100) selon la revendication 2, dans lequel:
l'élément isolant (330) s'étend le long d'une direction longitudinale de la partie étagée (300s).

4. Module de batterie (100) selon l'une quelconque des revendications précédentes, dans lequel :
un patin de blocage (350) est situé sur le cadre inférieur (300), et
le patin de blocage (350) est situé de manière adjacente par rapport à la partie étagée (300s).

5. Module de batterie (100) selon la revendication 4, dans lequel :
la partie restante de l'élément isolant (330) est située entre l'empilement d'éléments de batterie (120) et le patin de blocage (350).

6. Module de batterie (100) selon la revendication 4 ou la revendication 5, dans lequel :
le patin de blocage (350) s'étend dans la direction allant dans le sens de la largeur du cadre inférieur (300).

7. Module de batterie (100) selon l'une quelconque des revendications 4 à 6, dans lequel :
le patin de blocage (350) comporte un matériau isolant.

8. Module de batterie (100) selon l'une quelconque des revendications précédentes, dans lequel :
l'élément isolant (330) comporte au moins l'un parmi du PET (polyéthylène téréphtalate), du PC (polycarbonate), du PI (polyimide) et du PA (polyamide).

9. Bloc de batterie comportant le module de batterie (100) selon l'une quelconque des revendications précédentes.
